(19) Europäisches Patentamt / European Patent Office / Office européen des brevets

(11) **EP 3 933 470 A1**

(12) **EUROPEAN PATENT APPLICATION**
published in accordance with Art. 153(4) EPC

(43) Date of publication:
**05.01.2022 Bulletin 2022/01**

(51) Int Cl.:
**G02B 6/293** (2006.01)  **G02B 6/28** (2006.01)

(21) Application number: **20778779.7**

(22) Date of filing: **18.03.2020**

(86) International application number:
**PCT/CN2020/080000**

(87) International publication number:
**WO 2020/192526 (01.10.2020 Gazette 2020/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.03.2019 CN 201910235056**

(71) Applicant: **Huawei Technologies Co., Ltd.**
**Shenzhen, Guangdong 518129 (CN)**

(72) Inventors:
• **YIN, Xiang**
  **Shenzhen, Guangdong 518129 (CN)**
• **WANG, Yong**
  **Shenzhen, Guangdong 518129 (CN)**
• **LUO, Ji**
  **Shenzhen, Guangdong 518129 (CN)**

(74) Representative: **Körber, Martin Hans**
**Mitscherlich PartmbB**
**Patent- und Rechtsanwälte**
**Sonnenstrasse 33**
**80331 München (DE)**

(54) **MODE DIVISION MULTIPLEXER, MODE DIVISION MULTIPLEXING SYSTEM, DE-MULTIPLEXING SYSTEM, AND COMMUNICATION SYSTEM**

(57)    This application provides a mode division multiplexer, a mode division multiplexing system and a mode division demultiplexing system that include the mode division multiplexer, and a communications system that includes the mode division multiplexing system and the demultiplexing system. The mode division multiplexer includes a metasurface of an electromagnetic resonance unit that has a plurality of sub-wavelengths disposed in an array. The electromagnetic resonance unit is configured to perform phase modulation on a beam transmitted to the electromagnetic resonance unit, to convert a spatial mode order of the beam. Because a size of the electromagnetic resonance unit is a sub-wavelength, and a pixel size of the electromagnetic resonance unit is smaller than a pixel size of a spatial light modulator in the prior art, crosstalk between different spatial modes after phase modulation performed by the mode division multiplexer is comparatively low. In this way, the crosstalk is comparatively small when beams in different spatial modes are multiplexed into a few-mode/multi-mode fiber. In addition, compared with the prior-art spatial light modulator that has a polarization dependency problem, the mode division multiplexer in this application can implement polarization-independent phase modulation.

FIG. 8

EP 3 933 470 A1

## Description

### TECHNICAL FIELD

This application relates to the field of communications technologies, and in particular, to a mode division multiplexer, a mode division multiplexing system, a mode division demultiplexing system, and a communications system.

### BACKGROUND

In recent years, with rapid development of emerging services such as high-definition video, the internet of things, and cloud computing, people have increasing demand for bandwidth. Currently, a single-mode fiber has approached a theoretical transmission limit thereof, and a space division multiplexing technology is expected to greatly improve a capacity of fiber optic communications by using a new space division multiplexing dimension, to break the theoretical transmission limit of the single-mode fiber. As a type of space division multiplexing technology, mode division multiplexing has attracted wide attention in recent years. Mode division multiplexing uses an independent orthogonal mode in a few-mode/multi-mode fiber as a signal transmission channel to improve the capacity of fiber optic communications.

A mode division multiplexer is a type of essential component in a mode division multiplexing (mode division multiplexing, MDM) system. The mode division multiplexer is configured to multiplex independent signals in a single-mode fiber array or a multi-core fiber into corresponding modes in a few-mode/multi-mode fiber to implement a mode multiplexing function, or demultiplex signals in different modes that are transmitted in a few-mode/multi-mode fiber into a single-mode fiber or a multi-core fiber for independent transmission. Up to now, reported mode division multiplexers include the use of a binary phase plate, a long-period fiber grating, a fiber coupler, a photonic lantern, a multi-plane light converter, and the like. Multi-plane light conversion is considered as a most potentially valuable application technology. However, in an existing multi-plane light converter, phase plates or spatial light modulators are usually disposed on a plurality of discrete planes to implement continuous conversion of a spatial optical transmission wavefront. However, because of comparatively large pixel sizes of the spatial light modulator and the phase plate, there are problems such as low resolution and comparatively high crosstalk in a wavefront

### SUMMARY

This application provides a mode division multiplexer, to provide a mode division multiplexer that can implement high resolution, low crosstalk, and low insertion loss. This application further provides a mode division multiplexing system, a mode division demultiplexing system, and a fiber optic communications system.

According to a first aspect, this application provides a mode division multiplexer. The mode division multiplexer includes a first collimator, a second collimator, and a mode division multiplexing module located between the first collimator and the second collimator. Phase modulation is performed, by the mode division multiplexing module, for a plurality of times on a plurality of independent beams incident through the first collimator, to implement mode conversion and beam combination. A beam output through the mode division multiplexing module is incident on the second collimator.

The mode division multiplexing module includes a metasurface, the metasurface includes a plurality of sub-wavelength electromagnetic resonance units disposed in an array, and the electromagnetic resonance unit is configured to perform phase modulation on a beam transmitted to the electromagnetic resonance unit, to convert a spatial mode of the beam transmitted to the electromagnetic resonance unit. In this application, a period of the electromagnetic resonance unit is approximately half a wavelength of the beam, so that higher-order diffraction of the beam on the metasurface can be suppressed, thereby improving efficiency of wavefront conversion performed on the beam on the metasurface.

In this application, the mode division multiplexing module includes the metasurface, the electromagnetic resonance units disposed in an array are disposed on the metasurface, and the electromagnetic resonance unit can change a phase, an amplitude, a polarization state, and the like of the beam passing through the electromagnetic resonance unit. A spatial mode of a beam transmitted to the metasurface can be converted through a plurality of times of phase modulation performed on the metasurface. In this application, phase modulation of a beam is based on an equivalent refractive index change caused by electrical resonance and magnetic resonance. Specifically, when the beam passes through the electromagnetic resonance unit, electrical resonance and magnetic resonance are generated with the electromagnetic resonance unit. Therefore, when the beam is transmitted through the electromagnetic resonance unit, an equivalent refractive index of the electromagnetic resonance unit changes, and consequently, a phase of the beam after the beam is emitted through the electromagnetic resonance unit changes. Both the first collimator and the second collimator can implement beam collimation. A size of a light spot area of a beam transmitted to the metasurface is adjusted by using the beam collimation function of the first collimator, an incident direction of the beam is controlled so that the beam is transmitted to a corresponding position on the metasurface, and a phase change amount of the phase modulation is controlled by designing a structure of an electromagnetic resonance unit at the corresponding position, thereby implementing corresponding spatial mode conversion. A beam obtained after wavefront conversion performed through the mode division multiplexing module is coupled to an output fiber in a mode division multiplexing system by using the beam collimation function of the second collimator, so that independent signals in an input fiber in the mode division multiplexing system are multiplexed into corresponding modes in the output fiber in the mode division multiplexing system, to implement mode multiplexing.

Further, a size of the electromagnetic resonance unit is a sub-wavelength, that is, a feature size of the electromagnetic resonance unit is smaller than an operating wavelength, and the size of the electromagnetic resonance unit is smaller than a pixel size of the spatial light modulator or a phase plate in the prior art. Therefore, this avoids low resolution in a wavefront conversion process, ensures comparatively low crosstalk between different modes, and implements a better signal transmission effect. In addition, in this embodiment, wavefront conversion implemented on a beam on the metasurface achieves a smaller insertion loss and a smaller energy loss of the beam than wavefront conversion performed on the beam through the phase plate or the spatial light modulator in the prior art.

Further, compared with the spatial light modulator in the prior art, the metasurface in this application may be prepared on a large scale at low costs by using a technology such as photolithography or nanoimprint, so that costs of the mode division multiplexer can be reduced. In addition, wavefront conversion performed on a beam through the spatial light modulator, in particular a liquid crystal spatial light modulator in the prior art is related to a polarization direction of the beam, and consequently, a problem of polarization dependency occurs. Compared with the spatial light modulator in the prior art, the mode division multiplexing module in this application has no problem of polarization dependency; in other words, the metasurface in this application can implement polarization-independent phase modulation.

In this application, the size of the electromagnetic resonance unit on the metasurface matches a phase change value before and after the phase modulation of the beam is performed on the metasurface, and distribution of the electromagnetic resonance units of different sizes matches optical field distribution of the beam on the metasurface.

A size of an electromagnetic resonance unit on each metasurface matches a phase change value of the phase modulation performed on the beam on the metasurface. In other words, the size of the electromagnetic resonance unit on the metasurface can be designed based on the phase change value needed for the phase modulation performed on the beam on the metasurface. For example, in some embodiments, when the phase change value of the beam needs to be adjusted to be larger, for example, the beam needs to enabled to be converted from a fundamental mode state to a higher-order spatial mode, a size of an electromagnetic resonance unit at a corresponding position on which the beam is incident on the metasurface can be appropriately increased. Distribution of the electromagnetic resonance units of different sizes matches optical field distribution of the beam on the metasurface, that is, matches a position at which the beam is incident on the metasurface, so that the beam has different phase change amounts at different incident positions. In this application, sizes of the electromagnetic resonance units at different positions on the metasurface are designed based on the optical field distribution of the beam at different positions on the metasurface and phase change amounts needed for irradiating the beam at different positions on the metasurface, so that beams transmitted through different channels can be converted into beams with needed modes, to implement signal multiplexing and demultiplexing.

In some embodiments of this application, mode conversion satisfies the following formula:

$$O = F_{L2} \cdot T^n_{a \times b} \cdot F_{\Delta xn} \cdot T^{n-1}_{a \times b} \cdot \ldots F_{\Delta x2} \cdot T^2_{a \times b} \cdot F_{\Delta x1} \cdot T^1_{a \times b} \cdot F_{L1} \cdot I$$

I is an input optical field distribution matrix (namely, an optical field distribution matrix output by the first collimator), and O is an output optical field distribution matrix (namely, an optical field distribution matrix at a front end of the second collimator). L1 is a distance of transmitting a beam from the first collimator to the mode division multiplexing module, L2 is a distance of transmitting the beam from the mode division multiplexing module to the second collimator, and $F_{L1}$ and $F_{L2}$ respectively indicate Fresnel diffraction matrices corresponding to the transmission distances L1 and L2. $F_{\Delta xi}$ indicates a Fresnel diffraction matrix corresponding to a transmission distance $\Delta x_i$, the distance $\Delta x_i$ is a distance of transmitting the beam after $i^{th}$ phase modulation and before $(i+1)^{th}$ phase modulation, i=1, 2, ..., n, and n is a natural number greater than 1. $T^i_{a \times b}$ is a unitary matrix corresponding to the $i^{th}$ phase modulation performed on the metasurface, $a \times b$ indicates that each phase modulation is completed by using $a \times b$ pixels, each pixel has one or more electromagnetic resonance units disposed in an array, and the electromagnetic resonance units in each pixel are of a same structure, that is, the electromagnetic resonance units in each pixel are made of a same material and are of a same shape and a same size. An area of the metasurface including the $a \times b$ pixels is greater than an effective light spot area in a transmission process, so that the beam can be completely incident on the metasurface.

A unitary matrix $T^i_{a \times b}$ corresponding to each phase modulation performed on the metasurface is obtained by using the determined I, O, $F_{L1}$, $F_{L2}$, and $F_{\Delta xi}$, to obtain the sizes and the distribution of the electromagnetic resonance units on the metasurface.

In this application, the unitary matrix $T^i_{a \times b}$ corresponding to each phase modulation performed on the metasurface is obtained by using the mode conversion formula, to obtain a size of phase modulation corresponding to each pixel, and then determine a size of the electromagnetic resonance unit in each pixel and the distribution of the electromagnetic resonance units on the metasurface, to meet a mode conversion requirement of the mode division multiplexer.

In some embodiments of this application, the mode division multiplexer is a linearly polarized mode multiplexer, and a quantity N of multiplexing modes of the linearly polarized mode division multiplexer and a quantity (m+1) of times of phase modulation performed on the metasurface satisfy a formula: m=2N, so that a good phase modulation effect is implemented through a proper quantity of times of phase modulation.

In some other embodiments of this application, the mode division multiplexer is a non-linearly polarized mode multiplexer, and a quantity of multiplexing modes of the non-linearly polarized mode multiplexer is positively related to a quantity of times of phase modulation performed on the metasurface, that is, a larger quantity of multiplexing modes indicates a larger quantity of times of phase modulation performed on the metasurface, so that a good phase modulation effect is obtained. For example, the mode division multiplexer may be another non-linearly polarized mode multiplexer such as a Hermitian-Gaussian mode (HG mode) mode multiplexer.

In some embodiments of this application, both the first collimator and the second collimator are metasurfaces. Sizes and distribution of electromagnetic resonance units on the metasurface are designed, so that the metasurface has the beam collimation function, to adjust a size of a light spot of a beam incident on the metasurface in the mode division multiplexing module through the first collimator, and a beam output by the mode division multiplexing module can be coupled to the output fiber after being collimated through the second collimator. In some other embodiments of this application, the first collimator and the second collimator may be collimation lenses, to implement the beam collimation function.

Further, in this application, the electromagnetic resonance unit enables an adjustment range of a phase change value generated for a beam transmitted to the electromagnetic resonance unit to be 0 to $2\pi$, to ensure that the metasurface can effectively adjust a phase of the beam to any needed value.

In some embodiments of this application, the mode division multiplexing module includes a plurality of metasurfaces, the plurality of metasurfaces are disposed in parallel and spaced from each other, a beam sequentially passes through the plurality of metasurfaces, and phase modulation is generated once each time the beam passes through each metasurface, to implement mode conversion and multiplexing through a plurality of times of phase modulation, and reduce a phase change gradient after each phase modulation, thereby reducing a requirement for each metasurface. In these embodiments, each metasurface includes a×b pixels, so that each phase modulation is completed by using the a×b pixels, an area of the metasurface including the a×b pixels is greater than an effective light spot area in a transmission process, and the distance $\Delta x_i$ is a distance between an $i^{th}$ metasurface and an $(i+1)^{th}$ metasurface.

In these embodiments, a quantity of times of phase modulation performed through the metasurfaces is the same as a quantity of metasurfaces, and both are (m+1). When the mode division multiplexer is a linearly polarized mode division multiplexer, the quantity (m+1) of metasurfaces and a quantity N of multiplexing modes of the mode division multiplexer satisfy a formula: m=2N, so that a good phase modulation effect is implemented through a proper quantity of times of phase modulation.

In some embodiments, the metasurface includes a substrate, an array of the electromagnetic resonance units is disposed on a surface of the substrate, and a refractive index of a dielectric material of the electromagnetic resonance unit is greater than 2, in other words, a refractive index of a dielectric material forming the electromagnetic resonance unit is greater than 2. Because of electromagnetic resonance of the electromagnetic resonance unit made of the high-refractive-index dielectric material, a phase of a beam passing through the electromagnetic resonance unit can be easily changed, so that the phase of the beam transmitted through the electromagnetic resonance unit can be easily changed by changing the size of the electromagnetic resonance unit.

In an embodiment of this application, the substrate is a silicon dioxide substrate, and the electromagnetic resonance unit is a silicon nanocube. In this embodiment, the electromagnetic resonance unit is the silicon nanocube, and the silicon nanocube has a comparatively large refractive index and a comparatively low energy loss, so that the beam has a comparatively low loss after passing through the electromagnetic resonance unit, and a needed phase change can be easily obtained.

In some other embodiments of this application, the mode division multiplexing module includes two reflectors disposed spaced from each other, the beam is emitted after being reflected by the reflectors for a plurality of times between the two reflectors, at least one of the two reflectors is the metasurface, and phase modulation is performed once each time the beam is reflected on the metasurface. In these embodiments, phase modulation of the beam can be implemented without disposing a plurality of metasurfaces spaced from each other, so that a structure of the mode division multiplexing module can be simplified, to reduce a volume occupied by the mode division multiplexer.

In an embodiment of this application, one of the two reflectors is the metasurface, and the other reflector is a mirror reflector, the electromagnetic resonance units on the metasurface are disposed opposite to a reflection surface of the mirror reflector, and phase modulation is performed once each time the beam is reflected on the metasurface, so that mode conversion and multiplexing of the beam are implemented through a plurality of times of phase modulation performed on the beam on the metasurface. In these embodiments, the electromagnetic resonance units on the metasurface include a plurality of sub-regions in a transmission direction of the beam, and each reflection of the beam on the metasurface occurs on one sub-region, so that a quantity of times of phase modulation is the same as a quantity of sub-regions. In some embodiments, each sub-region includes a×b pixels, so that each phase modulation is completed by using the a×b pixels, and an area of each sub-region is greater than an effective light spot area in a transmission process. In these embodiments, the quantity of times of phase modulation performed on the metasurface is the same as the quantity of sub-regions, and both are (m+1). When the mode division multiplexer is a linearly polarized mode division multiplexer, the quantity (m+1) of sub-regions and a quantity N of multiplexing modes of the mode division multiplexer satisfy a formula: m=2N, so that a good phase modulation effect is implemented through a proper quantity of times of phase modulation.

In this embodiment, the metasurface includes a metal substrate, a dielectric layer, and an array layer that are disposed sequentially through stacking; the array layer includes a plurality of metal blocks disposed in an array; the metal substrate includes a plurality of first sub-blocks disposed in an array; the dielectric layer includes a plurality of second sub-blocks disposed in an array; the plurality of first sub-blocks are in a one-to-one correspondence with the plurality of second sub-blocks; one metal block is stacked on each second sub-block; and each first sub-block, each second sub-block, and the metal block stacked on the second sub-block form the electromagnetic resonance unit. In addition, in this embodiment, the reflection surface of the mirror reflector is disposed opposite to the metal blocks, in other words, the reflection surface of the mirror reflector faces the metasurface, and the metal blocks on the metasurface face the mirror reflector.

In another embodiment, both the two reflectors are metasurfaces, and phase modulation is performed once each time the beam is reflected on either of the two metasurfaces, so that mode conversion and multiplexing of the beam are implemented through a plurality of times of phase modulation performed on the beam through the two metasurfaces. In this embodiment, phase modulation can be performed on both the metasurfaces. Compared with a mode division multiplexer including a mirror reflector and a metasurface, a quantity of times of phase modulation that needs to be performed on a single metasurface is reduced, so that an area of the metasurface can be further reduced, to further reduce an area occupied by the mode division multiplexer. Likewise, in this embodiment, electromagnetic resonance units on the metasurface include a plurality of sub-regions in a transmission direction of the beam, and each reflection of the beam occurs on one sub-region, so that a quantity of times of phase modulation is the same as a sum of quantities of sub-regions of the two metasurfaces. In some embodiments, each sub-region includes a×b pixels, so that each phase modulation is completed by using the a×b pixels, and an area of each sub-region is greater than an effective light spot area in a transmission process. In addition, the quantity of times of phase modulation performed on the metasurfaces is the same as the sum of the quantities of sub-regions of the two metasurfaces, and both are (m+1). When the mode division multiplexer is a linearly polarized mode division multiplexer, the quantity (m+1) of sub-regions and a quantity N of multiplexing modes of the mode division multiplexer satisfy a formula: m=2N, so that a good phase modulation effect is implemented through a proper quantity of times of phase modulation.

In this embodiment, the metasurface includes a metal substrate, a dielectric layer, and an array layer that are disposed sequentially through stacking; the array layer includes a plurality of metal blocks disposed in an array; the metal substrate includes a plurality of first sub-blocks disposed in an array; the dielectric layer includes a plurality of second sub-blocks disposed in an array; the plurality of first sub-blocks are in a one-to-one correspondence with the plurality of second sub-blocks; one metal block is stacked on each second sub-block; and each first sub-block, each second sub-block, and the metal block stacked on the second sub-block form the electromagnetic resonance unit. In addition, in this embodiment, metal blocks on the two metasurfaces are disposed oppositely.

The electromagnetic resonance unit including the first sub-block, the second sub-block, and the metal block stacked on the second sub-block can reflect a beam, and electrical resonance and magnetic resonance of the electromagnetic resonance unit are excited when the beam is reflected on the electromagnetic resonance unit, to effectively implement phase modulation.

In some embodiments of this application, the metal substrate is an aluminum substrate, the dielectric layer is a silicon dioxide layer, and the metal block is a gold block.

In some embodiments of this application, the mode division multiplexer further includes an assembly component; and the first collimator, the second collimator, and the mode division multiplexing module are all assembled into the assembly component. The assembly component is configured to protect structures such as the first collimator, the second collimator, and the mode division multiplexing module that are located in the assembly component. Further, in some embodiments, a first optical fiber socket and a second optical fiber socket are respectively disposed on opposite sides of the assembly component; the first optical fiber socket is located on a side close to the first collimator, and the second optical fiber socket is located on a side close to the second collimator; and the first optical fiber socket is configured to be connected to the input fiber, and the second optical fiber socket is configured to be connected to the output fiber. In this embodiment, the first optical fiber socket and the second optical fiber socket are disposed on the assembly component, to facilitate connection of the input fiber and the output fiber in the mode division multiplexing system to the mode division multiplexer, and facilitate application of the mode division multiplexer to the mode division multiplexing system.

According to a second aspect, this application provides a mode division multiplexing system. The mode division multiplexing system includes an input fiber, an output fiber, and the mode division multiplexer. The input fiber and the output fiber are respectively connected to two opposite sides of the mode division multiplexer. The input fiber is close to a side of a first collimator in the mode division multiplexer; and the output fiber is close to a side of a second collimator in the mode division multiplexer. A beam is sequentially transmitted from the input fiber to the mode division multiplexer, and then to the output fiber. The input fiber is configured to provide a plurality of channels, and each channel transmits one independent beam to the mode division multiplexer. The output fiber includes a plurality of different fiber modes, and each fiber mode is used to transmit a beam of a corresponding spatial mode. The mode division multiplexer is configured to perform a plurality of times of phase modulation on a plurality of independent beams input through the input fiber, so that spatial modes of the plurality of beams are respectively converted into spatial modes that match different fiber modes in the output fiber, and combine the plurality of beams. Beams transmitted through different channels are converted into beams with different spatial modes through the mode division multiplexer.

The input fiber is a standard single-mode fiber array or a multi-core fiber. The output fiber is a few-mode fiber or a multi-mode fiber. The input fiber is the standard single-mode fiber array or the multi-core fiber, so that a plurality of channels are provided, to output an independent beam through each channel. The output fiber is the few-mode fiber or the multi-mode fiber, so that a plurality of different fiber modes are provided, to multiplex beams in different modes that are obtained after the mode conversion into the output fiber, thereby implementing space division multiplexing of the fiber and improving a capacity of fiber optic communications.

In this application, independent beams that are transmitted from different channels and input through the input fiber are transmitted to the first collimator in the mode division multiplexer, sizes of light spot areas of the beams transmitted to the metasurface in the mode division multiplexer are adjusted through the first collimator, and incident directions are adjusted, to transmit the beams to corresponding positions on the metasurface. After mode conversion is performed on the beams by the mode division multiplexing module, the beams are coupled to the output fiber through the second collimator, so that independent signals in the input fiber are multiplexed into corresponding modes in the output fiber, to implement a mode multiplexing function. In addition, the mode division multiplexer can implement high-resolution, low-crosstalk, and low-loss mode conversion, so that the mode division multiplexing system including the mode division multiplexer has high-resolution, low-crosstalk, and low-loss mode conversion, and crosstalk between different modes multiplexed into the output fiber is low.

Further, in this application, a few-mode/multi-mode fiber that supports a specific mode is selected based on a quantity of single-mode fibers in the standard single-mode fiber array or a quantity of cores of the multi-core fiber, so that the beams transmitted through the input fiber can finally be transmitted in different fiber modes in the output fiber.

According to a third aspect, this application further provides a mode division demultiplexing system. The mode division demultiplexing system includes an input fiber, an output fiber, and the mode division multiplexer. The input fiber and the output fiber are respectively connected to two opposite sides of the mode division multiplexer. The input fiber is close to a side of a second collimator in the mode division multiplexer; and the output fiber is close to a side of a first collimator in the mode division multiplexer. A beam is sequentially transmitted from the input fiber to the mode division multiplexer, and then to the output fiber. The input fiber is a few-mode or multi-mode fiber including a plurality of different fiber modes. The mode division multiplexer is configured to convert input different spatial modes and perform beam splitting, so that the input different spatial modes are converted into spatial modes that match a mode field of the output fiber. The output fiber is configured to receive and transmit each split beam emitted through the mode division multiplexer, the output fiber includes a plurality of channels, and each channel is configured to transmit one independent split beam.

The input fiber is the few-mode fiber or the multi-mode fiber, and has a plurality of different fiber modes; and the output fiber is a standard single-mode fiber array or a multi-core fiber, so that a plurality of independent channels disposed in parallel are provided, to transmit an independent signal through each channel.

In this application, a beam input through the input fiber is transmitted to the second collimator in the mode division multiplexer, and is transmitted to a mode division multiplexing module through the second collimator. The beam is split into a plurality of independent split beams by the mode division multiplexing module, and simultaneously a spatial mode of each split beam is converted by the mode division multiplexing module into a spatial mode that matches the mode field of the output fiber, so that the split beam can be transmitted in the output fiber. In some embodiments of this application, each output fiber is a standard single-mode fiber, and can be configured to transmit a signal in a fundamental mode state.

According to a fourth aspect, this application further provides a communications system. The communications system includes the mode division multiplexing system and the mode division demultiplexing system. The output fiber in the mode division multiplexing system is the input fiber in the demultiplexing system. Independent signals in the input fiber are multiplexed into corresponding modes in the output fiber by the mode division multiplexing system, and the signals are transmitted through the output fiber. Then, signals that are transmitted by the output fiber and that have a plurality of different fiber modes are demultiplexed into standard single-mode fibers or cores of a multi-core fiber in the output fiber through the demultiplexing system.

**BRIEF DESCRIPTION OF DRAWINGS**

FIG. 1 is a schematic structural diagram of a mode division multiplexer according to an embodiment of this application;
FIG. 2 is a schematic structural diagram of a metasurface of the mode division multiplexer according to the embodiment in FIG. 1;
FIG. 3 is a schematic structural diagram of a mode division multiplexer according to another embodiment of this application;
FIG. 4 is a schematic structural diagram of a mode division multiplexer according to another embodiment of this application;
FIG. 5 is a schematic diagram of a split structure of a metasurface of the mode division multiplexer according to the embodiment in FIG. 4;
FIG. 6 is a schematic structural diagram of a single electromagnetic resonance unit of the mode division multiplexer according to the embodiment in FIG. 4;
FIG. 7 is a schematic structural diagram of a mode division multiplexer according to another embodiment of this application;
FIG. 8 is a schematic structural diagram of a mode division multiplexer according to another embodiment of this application;
FIG. 9 is a schematic structural diagram of a mode division multiplexing system according to an embodiment of this application;
FIG. 10 is a schematic structural diagram of a mode division demultiplexing system according to an embodiment of this application; and
FIG. 11 is a schematic structural diagram of a communications system according to an embodiment of this application.

**DESCRIPTION OF EMBODIMENTS**

The following clearly and completely describes the technical solutions in the embodiments of this application with reference to the accompanying drawings in the embodiments of this application.

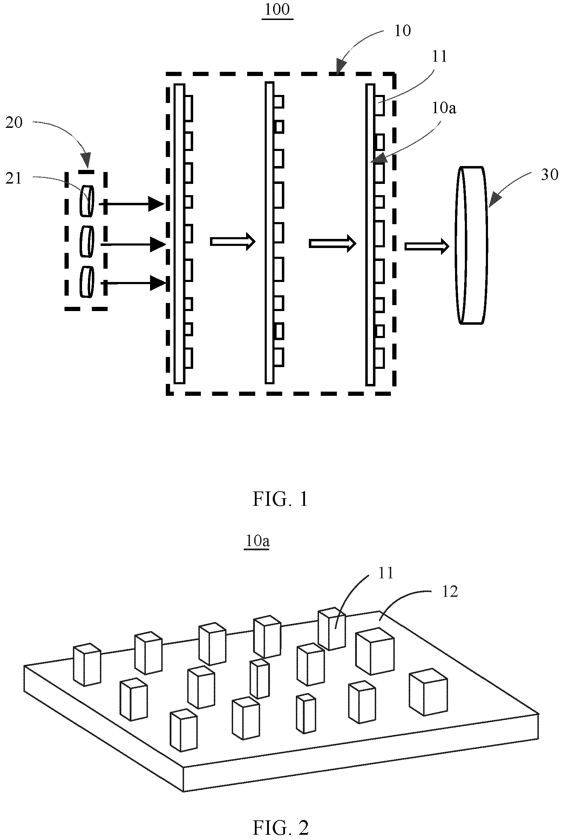

This application provides a mode division multiplexer. The mode division multiplexer is usually used in a space division multiplexing system (including a mode division multiplexing system, a mode division demultiplexing system, and the like), to improve a capacity of optical communication. Refer to FIG. 1 and FIG. 2. This application provides a mode division multiplexer 100. An arrow direction in FIG. 1 is a transmission direction of a beam in the mode division multiplexer 100 in this embodiment. In this application, an operating band of the mode division multiplexer is in a fiber optic communications band. The mode division multiplexer 100 includes a first collimator 20, a second collimator 30, and a mode division multiplexing module 10 located between the first collimator 20 and the second collimator 30. After mode conversion and beam combining are performed by the mode division multiplexing module 10 on a plurality of independent beams incident through the first collimator 20, a combined beam is incident on the second collimator 30.

The mode division multiplexing module 10 includes one or more metasurfaces 10a disposed in parallel and spaced from each other. The metasurface 10a is a laminated structure whose thickness is less than a wavelength, and the metasurface 10a includes sub-wavelength electromagnetic resonance units 11 disposed in an array. The electromagnetic resonance unit 11 can change a phase, an amplitude, a polarization state, and the like of a beam passing through the electromagnetic resonance unit 11, and a spatial mode of the beam may be converted through a plurality of times phase modulation performed on the beam by the mode division multiplexing module 10. For example, the beam is converted from a fundamental mode to a higher-order mode, or the beam is converted from a higher-order mode to a fundamental mode. The electromagnetic resonance unit 11 is of a sub-wavelength structure, that is, a feature size of the electromagnetic resonance unit 11 is smaller than an operating wavelength, and a period of the electromagnetic resonance unit is approximately half a wavelength of a light wave. In this application, the period of the electromagnetic resonance unit is a distance between centers of two adjacent electromagnetic resonance units. The feature size is a size of representative significance in sizes of the electromagnetic resonance unit 11. For example, when the electromagnetic resonance unit 11 is of a cylindrical structure, the feature size is essentially a height of the cylindrical structure and a cross-sectional radius of the cylindrical structure; or when the electromagnetic resonance unit 11 is of a quadrangular prism structure, the feature size is essentially a height of the quadrangular prism structure and a cross-sectional length and width of the quadrangular prism structure. In this embodiment, the electromagnetic resonance units 11 are all quadrangular prism structures. The electromagnetic resonance unit 11 is of the sub-wavelength structure, that is, the feature size of the electromagnetic resonance unit 11 is smaller than the operating wavelength, and is smaller than a pixel size of a spatial light modulator or a phase plate for phase modulation in the prior art. Therefore, this avoids low resolution in a wavefront conversion process, ensures comparatively low crosstalk between different modes, and implements a better signal transmission effect. A liquid crystal molecule in the spatial light modulator in the prior art has a specific polarization direction, and consequently, a problem of polarization dependency occurs on the spatial light modulator in the prior art. However, the metasurface 10a in this application can implement polarization-independent phase modulation. In addition, in this embodiment, wavefront conversion implemented on a beam on the metasurface 10a achieves a smaller insertion loss and a smaller energy loss of the beam than wavefront conversion performed on the beam through the spatial light modulator in the prior art.

Further, compared with the spatial light modulator in the prior art, the metasurface 10a in this application may be prepared on a large scale at low costs by using a technology such as photolithography or nanoimprint, so that preparation costs of the mode division multiplexer 100 can be reduced.

In this application, a size of an electromagnetic resonance unit 11 in each metasurface 10a matches a phase change value of phase modulation performed on the beam on the metasurface 10a. In other words, the size of the electromagnetic resonance unit 11 can be designed based on the phase change value needed by the beam, to implement corresponding phase modulation. For example, in some embodiments, when the phase change value of the beam needs to be adjusted to be larger, for example, the beam needs to enabled to be converted from a fundamental mode state to a higher-order spatial mode, the size of the electromagnetic resonance unit 11 may be appropriately increased. In addition, distribution of the electromagnetic resonance units 11 of different sizes matches optical field distribution of the beam on the metasurface 10a, that is, matches a light spot position at which the beam is incident on the metasurface 10a, so that the beam has different phase change amounts at different light spot positions at which the beam is incident on the metasurface 10a, to implement different phase modulation. In this application, needed phase change amounts are determined based on the optical field distribution of the beam at different positions on the metasurface 10a, and then sizes of the electromagnetic resonance units 11 at different positions on the metasurface 10a are designed, so that beams transmitted through different channels can be converted into beams with specific modes, thereby implementing signal multiplexing and demultiplexing.

In some embodiments of this application, mode conversion satisfies the following formula:

$$O = F_{L2} \cdot T^n_{a \times b} \cdot F_{\Delta xn} \cdot T^{n-1}_{a \times b} \cdot \ldots F_{\Delta x2} \cdot T^2_{a \times b} \cdot F_{\Delta x1} \cdot T^1_{a \times b} \cdot F_{L1} \cdot I$$

I is an input optical field distribution matrix (namely, an optical field distribution matrix that is of a beam and that is output through the first collimator 20), and O is an output optical field distribution matrix (namely, an optical field distribution matrix existing before the beam is input to the second collimator 30). L1 is a distance of transmitting the beam from the first collimator 20 to the mode division multiplexing module 10, L2 is a distance of transmitting the beam from the mode division multiplexing module 10 to the second collimator 30, and $F_{L1}$ and $F_{L2}$ respectively indicate Fresnel diffraction matrices corresponding to the distances L1 and L2. $F_{\Delta xi}$ indicates a Fresnel diffraction matrix corresponding to a transmission distance $\Delta x_i$, the distance $\Delta x_i$ is a distance of transmitting the beam after $i^{th}$ phase modulation and before $(i+1)^{th}$ phase modulation, i=1, 2, ..., n, and n is a natural number greater than 1. $T^i_{a \times b}$ is a unitary matrix corresponding to the $i^{th}$ phase modulation performed on the metasurface, $a \times b$ indicates that each phase modulation is completed by using $a \times b$ pixels, each pixel has one or more electromagnetic resonance units 11 disposed in an array, and the electromagnetic resonance units 11 in each pixel are of a same structure, that is, the electromagnetic resonance units 11 in each pixel are made of a same material and are of a same shape and a same size. An area of the metasurface including the $a \times b$ pixels is greater than an effective light spot area in a transmission process.

$T^i_{a \times b}$ matches electromagnetic resonance units 11 on a metasurface 10a corresponding to the $i^{th}$ phase modulation, that is, the electromagnetic resonance units 11 provide phase modulation of corresponding pixels. $F_{\Delta xi}$ indicates the Fresnel diffraction matrix corresponding to the passing distance $\Delta x_i$, and the distance $\Delta x_i$ is a distance between an $i^{th}$ metasurface 10a and an $(i+1)^{th}$ metasurface 10a.

A unitary matrix $T^i_{a \times b}$ corresponding to each phase modulation performed on the metasurface 10a is obtained by using the determined I, O, $F_{L1}$, $F_{L2}$, and $F_{\Delta xi}$, and a value of each numerical point in the unitary matrix $T^i_{a \times b}$ is a phase change amount of a pixel at a corresponding position on the metasurface. For example, if a value in an $i^{th}$ row and a $j^{th}$ column of the unitary matrix $T^i_{a \times b}$ is p, a phase change amount that needs to be generated when the beam is transmitted to a pixel in an $i^{th}$ row and a $j^{th}$ column on the metasurface 10a is p. Therefore, after the unitary matrix $T^i_{a \times b}$ is obtained according to the mode conversion formula, a phase change amount that needs to be generated through phase modulation performed on the beam at each of the $a \times b$ pixels is learned, so that distribution of the pixels of the metasurface 10a and sizes and distribution of electromagnetic resonance units 11 in each pixel can be designed, to obtain, through design, a metasurface 10a that meets an actual requirement. In other words, in this application, the metasurface 10a that meets the actual requirement can be easily obtained through design by using the mode conversion formula, which is simple and convenient.

Further, in this application, the electromagnetic resonance unit 11 enables a range of a phase change value generated for a beam transmitted to the electromagnetic resonance unit 11 to be 0 to $2\pi$, to ensure that the metasurface 10a can effectively adjust a phase of the beam to any needed value.

In this application, a quantity of times of phase modulation performed on the beam on the metasurface 10a is set in a specific linear relationship with a quantity of multiplexing modes of the mode division multiplexer 100, so that a good phase modulation effect can be implemented through a proper quantity of times of phase modulation. In some embodiments of this application, the mode division multiplexer 100 is a linearly polarized mode division multiplexer, and a quantity N of multiplexing modes of the linearly polarized mode division multiplexer 100 and the quantity (m+1) of times of phase modulation performed on the metasurface 10a satisfy a formula: m=2N. In some other embodiments of this application, the mode division multiplexer 100 is a non-linearly polarized mode multiplexer, and a quantity of multiplexing modes of the non-linearly polarized mode multiplexer is positively related to the quantity of times of phase modulation performed on the metasurface 10a, that is, a larger quantity of multiplexing modes indicates a larger quantity of times of phase modulation performed on the metasurface 10a, so that a good phase modulation effect is obtained. In this application, the mode division multiplexer 100 may be another non-linearly polarized mode multiplexer such as a Hermitian-Gaussian mode (HG mode) mode multiplexer.

In this application, the mode division multiplexing module 10 may be of a transmissive or reflective structure.

In this embodiment, the mode division multiplexing module 10 is transmissive, and a beam passes through the metasurface 10a to implement corresponding phase modulation. The mode division multiplexing module 10 includes a plurality of metasurfaces 10a, and the plurality of metasurfaces 10a are disposed oppositely in parallel. Phase modulation is generated once when the beam passes through each metasurface 10a, to convert a mode of the beam through a plurality of times of phase modulation, so that a gradient of phase modulation performed on the beam through a single metasurface 10a is comparatively small, thereby reducing a requirement for each metasurface 10a. In this embodiment, each metasurface 10a may be split into a×b pixels, so that each phase modulation is completed by using the a×b pixels, and an area of the metasurface including the a×b pixels is greater than an effective light spot area in a transmission process. In this embodiment, both a central axis of the first collimator 20 and a central axis of the second collimator 30 are perpendicular to a plane in which the metasurface 10a is located, and the transmission direction of the beam is perpendicular to the plane in which the metasurface 10a is located. In this embodiment, the distance between the $i^{th}$ metasurface and the $(i+1)^{th}$ metasurface is the distance $Ax_i$ in the mode conversion formula. The metasurfaces 10a can be arranged at equal intervals or at non-equal intervals. In this embodiment, the metasurfaces 10a are arranged at equal intervals, in other words, $\Delta_{X1=}\Delta_{X2} ... =\Delta x_n$.

In this embodiment, because phase modulation is generated once when the beam passes through each metasurface 10a, a quantity of times of phase modulation performed on the metasurfaces is the same as a quantity of metasurfaces 10a. Therefore, when the mode division multiplexer is a linearly polarized mode division multiplexer, the quantity (m+1) of metasurfaces 10a and a quantity N of multiplexing modes of the mode division multiplexer 100 satisfy a formula: m=2N, so that a good phase modulation effect is implemented through a proper quantity of times of phase modulation.

In this embodiment, the metasurface 10a further includes a substrate 12, and the electromagnetic resonance units 11 are disposed on a surface of the substrate 12. In addition, in this embodiment, the substrate 12 includes a first surface and a second surface that are opposite to each other, and first surfaces of the metasurfaces 10a face a same side. The electromagnetic resonance units 11 can be located on the first surface or the second surface. In this embodiment, each metasurface 10a is located on the first surface.

In this embodiment, a material forming the electromagnetic resonance unit 11 is a dielectric material having a comparatively large refractive index, and a beam has a comparatively low energy loss after passing through the electromagnetic resonance unit 11. In addition, in this embodiment, the refractive index of the dielectric material forming the electromagnetic resonance unit 11 is greater than 2. Because of electromagnetic resonance of the electromagnetic resonance unit 11 made of the high-refractive-index dielectric material, a phase of a beam passing through the electromagnetic resonance unit 11 can be easily changed, so that the phase of the beam transmitted through the electromagnetic resonance unit 11 can be easily changed by changing the size of the electromagnetic resonance unit 11.

In this embodiment, the substrate 12 may be a silicon dioxide substrate, and the electromagnetic resonance unit 11 may be a silicon nanocube. The silicon nanocube is in a shape of a quadrangular prism, and a cross-section that is of the silicon nanocube and that is parallel to the substrate 12 is a square with an edge length W. It may be understood that, in another embodiment of this application, the electromagnetic resonance unit 11 may alternatively be of another block structure, such as a cylindrical structure or a multi-prism structure. In this embodiment, the electromagnetic resonance units 11 have a same height H, and a phase change value of a beam passing through the metasurface 10a is controlled by controlling the edge length W of the cross-section of the silicon nanocube. It may be understood that, in another embodiment of this application, the substrate 12 and the electromagnetic resonance unit 11 may be made of other materials. For example, the electromagnetic resonance unit 11 may be in a shape of a block made of a material such as silicon nitride.

In some embodiments of this application, the mode division multiplexer 100 further includes an assembly component, and the first collimator 20, the second collimator 30, and the mode division multiplexing module 10 are all assembled into the assembly component to protect structures such as the first collimator 20, the second collimator 30, and the mode division multiplexing module 10 that are located in the assembly component.

Further, in some embodiments, a first optical fiber socket and a second optical fiber socket are respectively disposed on two opposite sides of the assembly component, the first optical fiber socket is located on a side close to the first collimator 20, the second optical fiber socket is located on a side close to the second collimator 30, the first optical fiber socket is configured to be connected to an input fiber, and the second optical fiber socket is configured to be connected to an output fiber. In this embodiment, the first optical fiber socket and the second optical fiber socket are disposed on the assembly component, to facilitate connection of the input fiber and the output fiber in a mode division multiplexing system to the mode division multiplexer 100, and facilitate application of the mode division multiplexer 100 to the mode division multiplexing system.

The first collimator 20 is configured to control a size of a light spot area of a beam transmitted to the metasurface 10a. The second collimator 30 is configured to couple a beam emitted through the mode division multiplexing module 10 to the output fiber for transmission. In this embodiment, the first collimator 20 and the second collimator 30 each include a microlens 21; and the first collimator 20 and the second collimator 30 each may include a single microlens 21, or may include a lens array including a plurality of microlenses 21. In this embodiment, the first collimator 20 includes a lens array including a plurality of microlenses 21, each microlens 21 corresponds to one incident beam, and each beam can be transmitted to the mode division multiplexing module 10 through a corresponding microlens, so that the beam is more precisely adjusted, to obtain an input optical field distribution matrix that meets a requirement. The second collimator 30 is a microlens 21.

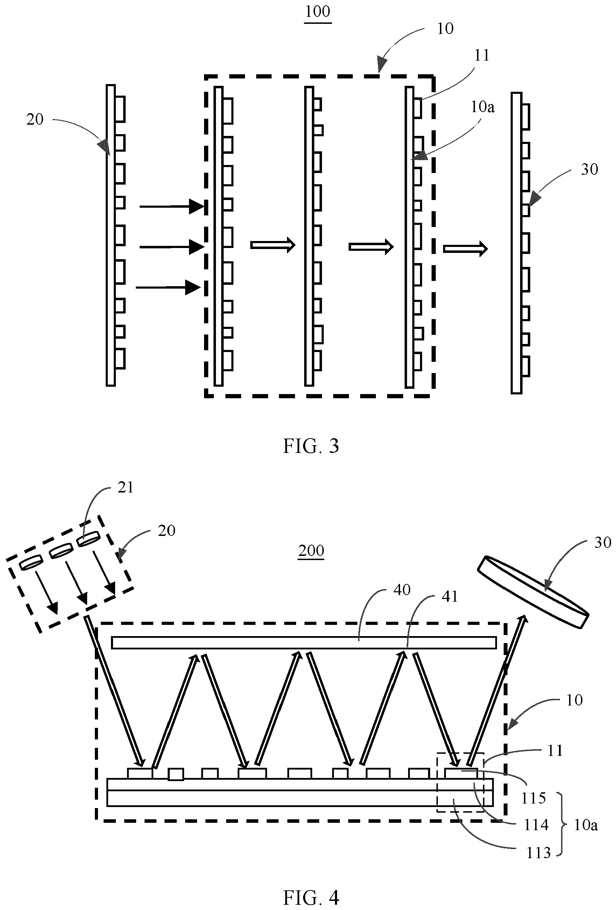

In another embodiment of this application, for example, in an embodiment shown in FIG. 3, both the first collimator 20 and the second collimator 30 may be metasurfaces. A metasurface that is of the first collimator 20 has a beam collimation function by designing sizes and distribution of electromagnetic resonance units on the metasurface. A size of a light spot of a beam incident on the metasurface through the first collimator 20 is adjusted by using the beam collimation function of the first collimator 20. The second collimator 30 is enabled to couple, to the output fiber by using a collimation function of the second collimator 30, a beam output through the mode division multiplexing module 10.

FIG. 4 provides another mode division multiplexer 200 according to this application. A mode division multiplexing module 10 in the mode division multiplexer 200 is of a reflective structure, that is, a beam is reflected when being transmitted to a metasurface 10a in the mode division multiplexing module 10. Specifically, a difference between the mode division multiplexer 200 and the mode division multiplexer 100 lies in that the mode division multiplexing module 10 includes two reflectors that are disposed spaced from each other, a beam is emitted after being reflected by the reflectors for a plurality of times between the two reflectors, at least one of the two reflectors is the metasurface 10a, and phase modulation is performed once each time the beam is reflected on the metasurface 10a. In these embodiments, compared with the mode division multiplexing module 100, phase modulation of the beam can be implemented without disposing a plurality of metasurfaces 10a spaced from each other, so that a structure of the mode division multiplexing module 10 in the mode division multiplexer 200 can be simplified, to reduce a volume occupied by the mode division multiplexer 200.

Specifically, in this embodiment, one of the two reflectors is the metasurface 10a, and the other reflector is a mirror reflector 40. The mirror reflector 40 includes a reflection surface 41 that can reflect a beam, and the reflection surface 41 of the mirror reflector 40 faces the metasurface 10a, so that the beam is transmitted to the metasurface 10a after being reflected by the mirror reflector 40. Phase modulation is performed once each time the beam is reflected on the metasurface 10a. In addition, a central axis of the first collimator 20 and a central axis of the second collimator 30 each are at an angle θ with the metasurface 10a, so that the beam can be incident on the metasurface 11 and transmitted to a side of the second collimator 30. The beam is emitted after being reflected for a plurality of times between the mirror reflector 40 and the metasurface 10a. Phase modulation is generated once each time the beam is reflected on the metasurface 10a, and mode conversion and multiplexing of the beam are implemented after a plurality of times of phase modulation. In this embodiment, there is no need to dispose a plurality of metasurfaces 10a spaced from each other, so that the structure of the mode division multiplexing module 10 in the mode division multiplexer 200 is simplified, to reduce the volume occupied by the mode division multiplexer 200. The metasurface 10a has a plurality of sub-regions disposed adjacently, the sub-regions are sequentially disposed in a transmission direction of the beam, and each reflection of the beam occurs on one sub-region. Each sub-region includes a×b pixels, so that each phase modulation is completed by using the a×b pixels, and an area of each sub-region is greater than an effective light spot area in a transmission process. In this embodiment, the metasurface 10a is disposed in parallel with the reflection surface 41, and a distance between a surface that is of the metasurface 10a and on which electromagnetic resonance units 11 are disposed and the reflection surface 41 is $D_1$, so that there is a same distance between positions at which any two adjacent times of reflection of the beam occur on the metasurface 10a, the distance between the positions at which two adjacent times of reflection occur is $D_2$, and $D_2 = 2D_1/\tan\theta$. In this embodiment, the distance $\Delta x_i = 2D_1/\sin\theta$ in the mode conversion formula.

In this embodiment, because each reflection of the beam occurs on one sub-region, and phase modulation is generated once each time the beam is reflected on the metasurface 10a, a quantity of times of phase modulation performed on the metasurface is the same as a quantity of sub-regions of the metasurface 10a. Therefore, when the mode division multiplexer is a linearly polarized mode division multiplexer, the quantity (m+1) of sub-regions and a quantity N of multiplexing modes of the mode division multiplexer satisfy the following formula: m=2N, so that a good phase modulation effect is implemented through a proper quantity of times of phase modulation.

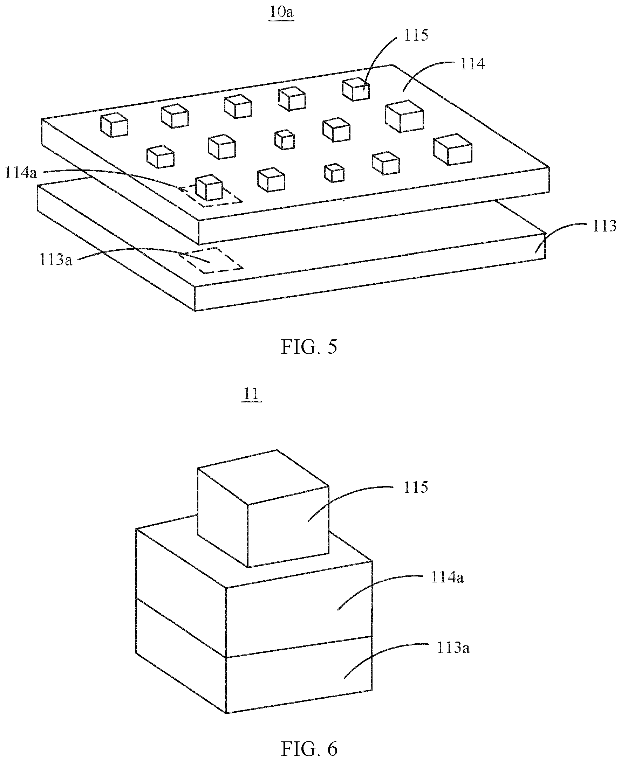

Refer to FIG. 5 and FIG. 6. In this embodiment, the metasurface 10a in the mode division multiplexer 200 includes a metal substrate 113, a dielectric layer 114, and an array layer that are disposed sequentially through stacking. The array layer includes a plurality of metal blocks 115 disposed in an array. The metal substrate 113 includes a plurality of first sub-blocks 113a disposed in an array. The dielectric layer 114 includes a plurality of second sub-blocks 114a disposed in an array. The plurality of first sub-blocks 113a are in a one-to-one correspondence with the plurality of second sub-blocks 114a, that is, an orthographic projection of each second sub-block 114a on the metal substrate 113 coincides with one first sub-block 113a. In addition, one metal block 115 is stacked on each second sub-block 114a; and each first sub-block 113a, each second sub-block 114a, and each metal block 115 disposed on the second sub-block 114a form the electromagnetic resonance unit 11. In this embodiment, a period of the electromagnetic resonance unit 11 is the same as an edge length of the first sub-block 113a or the second sub-block 114a. The electromagnetic resonance unit 11 including the first sub-block 113a, the second sub-block 114a, and the metal block 115 disposed on the second sub-block 114a can reflect a beam, and corresponding electrical resonance and magnetic resonance are excited when the beam is incident on the electromagnetic resonance unit 11, to generate a phase change. In this embodiment, the reflection surface 41 is disposed opposite to the metal blocks 115, in other words, the reflection surface 41 faces the metasurface 10a, and the metal blocks 115 on the metasurface 10a face the mirror reflector 40. In an embodiment of this application, the metal substrate 113 is an aluminum substrate, the dielectric layer 114 is a silicon dioxide layer, and the metal block 115 is a gold block. It may be understood that in this application, the metal substrate 113, the dielectric layer 114, and the metal block 115 may be made of other materials. For example, the metal block 115 may alternatively be made of a material such as aluminum or silver.

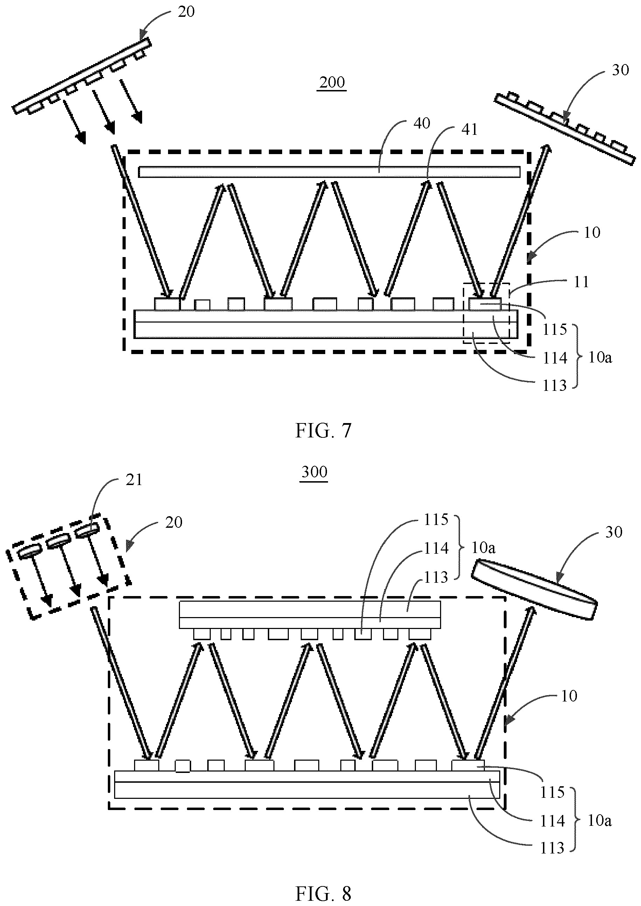

It may be understood that structures of the first collimator 20 and the second collimator 30 in the mode division multiplexer 200 are the same as structures of the first collimator 20 and the second collimator 30 in the mode division multiplexer 100, and each may be of a structure including the microlens 21, or may be of a structure including the metasurface. In the embodiment shown in FIG. 7, the first collimator 20 and the second collimator 30 in the mode division multiplexer 200 each are of a structure including the metasurface.

Refer to FIG. 8. Another embodiment of this application provides a mode division multiplexer 300. A difference between the mode division multiplexer 300 and the mode division multiplexer 200 lies in that two reflectors in the mode division multiplexer 300 each are the metasurface 10a, and phase modulation is performed once each time a beam is reflected on either of the two metasurfaces 10a, so that mode conversion and multiplexing of the beam are implemented through a plurality of times of phase modulation performed on the beam through the two metasurfaces 10a. In addition, in this embodiment, phase modulation can be performed on both the two metasurfaces 10a. Compared with the mode division multiplexer 200, a quantity of times of phase modulation that needs to be performed on a single metasurface 10a is reduced, so that an area of the metasurface 10a in the mode division multiplexer 300 in this embodiment can be further reduced, to reduce an occupation area of the mode division multiplexer 300. Likewise, in this embodiment, electromagnetic resonance units 11 on the metasurface 10a include a plurality of sub-regions in a transmission direction of the beam, and each reflection of the beam occurs on one sub-region, so that a quantity of times of phase modulation is the same as a sum of quantities of sub-regions of the two metasurfaces 10a. In some embodiments, each sub-region includes a×b pixels, so that each phase modulation is completed by using the a×b pixels, and an area of each sub-region is greater than an effective light spot area in a transmission process. In addition, the quantity of times of phase modulation performed on the metasurfaces is the same as the sum of the quantities of sub-regions of the two metasurfaces 10a, and both are (m+1). Therefore, when the mode division multiplexer 300 is a linearly polarized mode division multiplexer, the quantity (m+1) of sub-regions and a quantity N of multiplexing modes of the mode division multiplexer 300 satisfy the following formula: m=2N, so that a good phase modulation effect is implemented through a proper quantity of times of phase modulation.

In this embodiment, the two metasurfaces 10a are disposed in parallel, a distance between the two metasurfaces 10a is $D_1$, a distance between positions at which two adjacent times of reflection occur on a same metasurface is $D_2$, and $D_2 = 2D_1/\tan\theta$. In this embodiment, the distance $\Delta x_i = D_1/\sin\theta$ in the mode conversion formula.

Further, in this embodiment, a structure of the metasurface 10a in the mode division multiplexer 300 is the same as a structure of the metasurface 10a in the mode division multiplexer 200, and metal blocks 115 on the two metasurfaces 10a in the mode division multiplexer 300 are disposed oppositely, to ensure that the metasurface 10a has a phase modulation function while implementing a reflection effect.

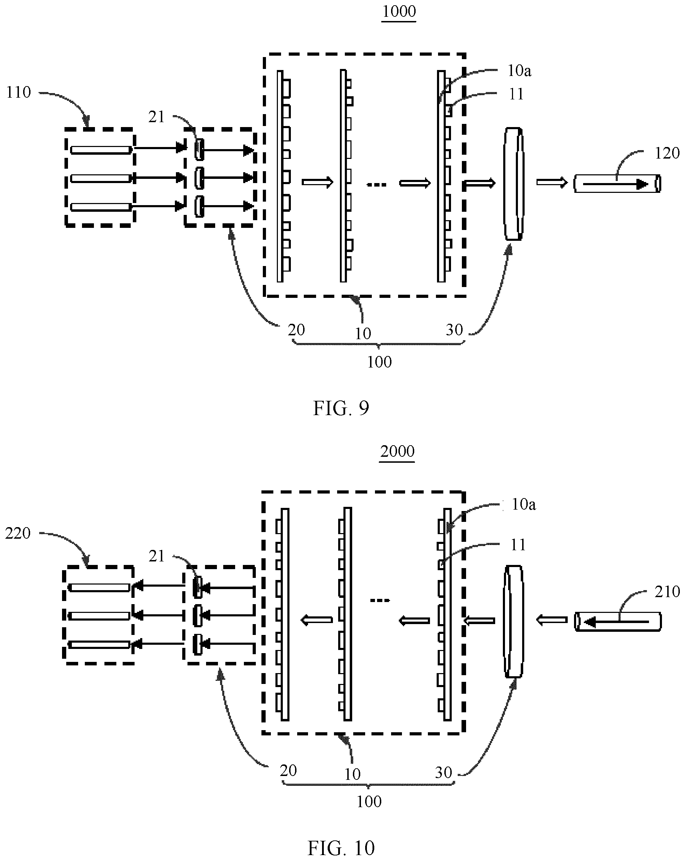

Refer to FIG. 9. This application provides a mode division multiplexing system 1000. The mode division multiplexing system 1000 is configured to convert and multiplex a transmission mode in a single-mode fiber array or a multi-core fiber, so that signals in channels are multiplexed into a same few-mode fiber or a multi-mode fiber. The mode division multiplexing system 1000 includes an input fiber 110, an output fiber 120, and the mode division multiplexer 100. It may be understood that in another embodiment of this application, the mode division multiplexer may alternatively be the mode division multiplexer 200, the mode division multiplexer 300, or a mode division multiplexer in another embodiment of this application. The input fiber 110, the mode division multiplexer 100, and the output fiber 120 are sequentially located on a propagation path of a beam. The input fiber and the output fiber are respectively connected to two opposite sides of the mode division multiplexer 100. The input fiber is close to a side of the first collimator 20 in the mode division multiplexer 100. The output fiber is close to a side of the second collimator 30 in the mode division multiplexer 100. The beam is sequentially transmitted from the input fiber to the mode division multiplexer 100, and then to the output fiber.

The input fiber 110 is configured to provide a plurality of channels. In this embodiment, the input fiber 110 is a standard single-mode fiber array or a multi-core fiber, and each single-mode fiber or each core provides one channel for signal transmission. Each channel transmits one independent beam to the mode division multiplexing module 10 through the first collimator 20. The first collimator 20 controls a size of a light spot area of the beam transmitted to the metasurface 10a. In this application, a size of a light spot of the beam transmitted to the metasurface 10a is adjusted through the first collimator 20, and an arrangement manner of fibers or cores in the input fiber 110 affects the optical field distribution matrix I output by the collimator 20.

The output fiber 120 is a few-mode fiber or a multi-mode fiber, and can provide a plurality of different fiber modes. Beams in different modes that are obtained after the mode conversion are multiplexed into the output fiber, to implement space division multiplexing of a signal and improve a capacity of fiber optic communications. In addition, positions of the output fiber 120 and the mode division multiplexer are fixed, so that positions of the output fiber 120 and the metasurface 10a are fixed. Therefore, the output optical field distribution matrix O can be determined.

The mode division multiplexer 100 is configured to perform phase modulation for a plurality of times on a plurality of independent beams input by the input fiber 110, so that spatial modes of the plurality of beams are respectively converted into spatial modes that match different fiber modes in the output fiber 120, and combine the plurality of beams. Beams transmitted through different channels are converted into beams with different spatial modes through the mode division multiplexer 100. For example, in an embodiment, the beams transmitted through the input fiber 110 are all in a fundamental linearly polarized (linearly polarized, LP) mode (namely, $LP_{01}$ mode), and the output fiber 120 supports fiber modes such as $LP_{11}$, $LP_{02}$, and $LP_{12}$, where the subscripts are angular orders and radial orders of the modes. Therefore, the plurality of beams in the $LP_{01}$ mode are converted into beams with modes such as $LP_{11}$, $LP_{02}$, and $LP_{12}$ through the mode division multiplexer 100, and after the plurality of beams are combined through the mode division multiplexer 100, a combined beam is coupled to the output fiber 120.

In this application, independent beams that are transmitted from different channels and input through the input fiber 110 are transmitted to the first collimator 20, and a size of a light spot area of the beam transmitted to the metasurface 10a in the mode division multiplexer 100 is adjusted through the first collimator 20. After mode conversion and beam combining are performed by the mode division multiplexer 100 on the plurality of beams input through the first collimator 20, the combined beam is coupled to the output fiber 120 through the second collimator 30, so that independent signals in the input fiber 110 are multiplexed into corresponding modes in the output fiber 120, thereby implementing a mode multiplexing function. In addition, the mode division multiplexer 100 can implement high-resolution, low-crosstalk, and low-loss wavefront conversion, so that the mode division multiplexing system including the mode division multiplexer 100 has high-resolution, low-crosstalk, and low-loss features, and crosstalk between fiber modes multiplexed into the output fiber 120 is low.

In this application, a few-mode/multi-mode fiber that supports a specific mode is selected based on a quantity of single-mode fibers in the standard single-mode fiber array or a quantity of cores of the multi-core fiber, so that a plurality of signals transmitted through the input fiber 110 can finally be transmitted in different fiber modes in the output fiber 120. Refer to FIG. 10. This application further provides a mode division demultiplexing system 2000. The mode division demultiplexing system 2000 is configured to convert different transmission modes in a same fiber and split a beam, and separately transmit split beams through independent fibers. In this application, a structure of the mode division demultiplexing system 2000 is the same as a structure of the mode division multiplexing system 1000; and a difference between the structure of the mode division demultiplexing system 2000 and the structure of the mode division multiplexing system 1000 lies in that a transmission direction of a beam in the mode division demultiplexing system 2000 is opposite to a transmission direction of a beam in the mode division multiplexing system 1000.

Specifically, the mode division demultiplexing system 2000 includes an input fiber 210, an output fiber 220, and the mode division multiplexer 100. The input fiber 210 and the output fiber 220 are respectively connected to two opposite sides of the mode division multiplexer 100. The input fiber 210 is close to a side of the second collimator 30 in the mode division multiplexer 100. The output fiber 220 is close to a side of the first collimator 20 in the mode division multiplexer 100. A beam is sequentially transmitted from the input fiber 210 to the mode division multiplexer 100, and then to the output fiber 220. In another embodiment of this application, the mode division demultiplexing may alternatively be the mode division multiplexer 200, the mode division multiplexer 300, or a mode division multiplexer in another embodiment of this application. The input fiber 210 is configured to transmit signals in different fiber modes, to improve a capacity of fiber optic communications. The input fiber 210 supports a plurality of different fiber modes, and each fiber mode corresponds to one type of specific optical field distribution. The mode division multiplexer 100 splits a beam input through the input fiber 210 into a plurality of independent split beams and performs corresponding mode conversion, so that optical field distribution of a spatial mode of each split beam matches a mode field of the output fiber 220 after the conversion.

The input fiber 210 is a few-mode fiber or a multi-mode fiber, and has a plurality of different fiber modes. The output fiber 220 is a standard single-mode fiber array or a multi-core fiber, so that a plurality of independent channels disposed in parallel are provided, to transmit an independent signal through each channel.

In this embodiment, the beam input through the input fiber 210 is transmitted to the second collimator 30 in the mode division multiplexer 100, and is transmitted to the mode division multiplexing module 10 through the second collimator 30. The beam is split into the plurality of independent split beams by the mode division multiplexing module 10, and simultaneously the spatial mode of each split beam is converted into the spatial mode that matches the mode field of the output fiber 220, so that the split beam can be transmitted in the output fiber. In some embodiments of this application, each mode supported by the output fiber 220 is a fundamental linearly polarized mode (namely, $LP_{01}$ mode) for transmitting a signal in a fundamental mode state.

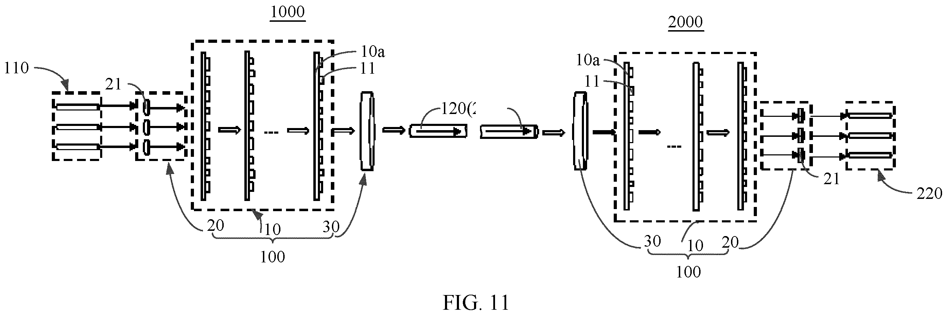

Refer to FIG. 11. This application further provides a communications system. The communications system includes the mode division multiplexing system 1000 and the demultiplexing system 2000. The output fiber 120 in the mode division multiplexing system 1000 is the input fiber 210 in the mode division demultiplexing system 2000, in other words, the output fiber 120 and the input fiber 210 are a same fiber. Independent signals in the input fiber 110 are multiplexed into corresponding modes in the output fiber 120 through the mode division multiplexing system 1000, and the signals are transmitted through the output fiber 120. Then, the signals that are transmitted by the output fiber 120 and that have a plurality of different fiber modes are demultiplexed into standard single-mode fibers or cores in the output fiber 220 through the demultiplexing system 2000.

The foregoing descriptions are example implementations of this application. It should be noted that a person of ordinary skill in the art may make several improvements or polishing without departing from the principle of this application and the improvements or polishing shall fall within the protection scope of this application.

**Claims**

1.    A mode division multiplexer, comprising a first collimator, a second collimator, and a mode division multiplexing module located between the first collimator and the second collimator, wherein the mode division multiplexing module performs a plurality of times of phase modulation on a plurality of independent beams incident through the first collimator, to implement mode conversion and beam combination, and a beam output through the mode division multiplexing module is incident on the second collimator; and
the mode division multiplexing module comprises a metasurface, wherein the metasurface comprises a plurality of sub-wavelength electromagnetic resonance units disposed in an array, and the electromagnetic resonance unit is configured to perform the phase modulation on a beam transmitted to the electromagnetic resonance unit, to convert a spatial mode of the beam transmitted to the electromagnetic resonance unit.

2.    The mode division multiplexer according to claim 1, wherein the mode division multiplexing module comprises two reflectors disposed oppositely, the beam is emitted after being reflected by the reflectors for a plurality of times between the two reflectors, and at least one of the two reflectors is the metasurface, and the phase modulation is performed once each time the beam is reflected on the metasurface.

3.    The mode division multiplexer according to claim 2, wherein one of the two reflectors is the metasurface, the other reflector is a mirror reflector, a reflection surface of the mirror reflector faces the metasurface, and the phase modulation is performed once each time the beam is reflected on the metasurface.

4.    The mode division multiplexer according to claim 2, wherein both of the two reflectors are metasurfaces, and the phase modulation is performed once each time the beam is reflected on either of the two metasurfaces.

5.    The mode division multiplexer according to claim 3 or 4, wherein the metasurface comprises a metal substrate, a dielectric layer, and an array layer that are disposed sequentially through stacking; the array layer comprises a plurality of metal blocks disposed in an array; the metal substrate comprises a plurality of first sub-blocks disposed in an array; the dielectric layer comprises a plurality of second sub-blocks disposed in an array; the plurality of first sub-blocks are in a one-to-one correspondence with the plurality of second sub-blocks, and one metal block is stacked on each second sub-block; and each first sub-block, each second sub-block, and the metal block stacked on the second sub-block form the electromagnetic resonance unit.

6. The mode division multiplexer according to claim 5, wherein the metal substrate is an aluminum substrate, the dielectric layer is a silicon dioxide layer, and the metal block is a gold block.

7. The mode division multiplexer according to claim 1, wherein the mode division multiplexing module comprises a plurality of metasurfaces, the plurality of metasurfaces are disposed in parallel and spaced from each other, a beam sequentially passes through the plurality of metasurfaces, and the phase modulation is performed once each time the beam passes through one of the metasurfaces.

8. The mode division multiplexer according to claim 7, wherein the metasurface comprises a substrate, an array of the electromagnetic resonance units is disposed on a surface of the substrate, and a refractive index of a dielectric material forming the electromagnetic resonance unit is greater than 2.

9. The mode division multiplexer according to claim 8, wherein the substrate is a silicon dioxide substrate, and the electromagnetic resonance unit is a silicon nanocube.

10. The mode division multiplexer according to any one of claims 1 to 9, wherein a size of the electromagnetic resonance unit on the metasurface matches a phase change value of the beam before and after the phase modulation performed by the electromagnetic resonance unit; and distribution of the electromagnetic resonance units of different sizes matches light field distribution of the beam on the metasurface.

11. The mode division multiplexer according to claim 10, wherein mode conversion satisfies the following formula:

$$O = F_{L2} \bullet T^n_{a \times b} \bullet F_{\Delta \times n} \bullet T^{n-1}_{a \times b} \bullet ... F_{\Delta x2} \bullet T^2_{a \times b} \bullet F_{\Delta x1} \bullet T^1_{a \times b} \bullet F_{L1} \bullet I$$

I is an input optical field distribution matrix, and O is an output optical field distribution matrix; L1 is a distance of transmitting a beam from the first collimator to the mode division multiplexing module, L2 is a distance of transmitting the beam from the mode division multiplexing module to the second collimator, and $F_{L1}$ and $F_{L2}$ respectively indicate Fresnel diffraction matrices corresponding to transmission distances L1 and L2; $F_{\Delta xi}$ indicates a Fresnel diffraction matrix corresponding to a transmission distance $\Delta xi$, wherein the distance $\Delta xi$ is a distance of transmitting the beam after $i^{th}$ phase modulation and before $(i+1)^{th}$ phase modulation of the beam, i=1, 2, ..., n, and n is a natural number greater than 1; $T^i_{a \times b}$ is a unitary matrix corresponding to the $i^{th}$ phase modulation performed on the metasurface, $a \times b$ indicates that each phase modulation is completed by using $a \times b$ pixels, and each pixel has one or more electromagnetic resonance units disposed in an array; and an area of the metasurface comprising the $a \times b$ pixels is greater than an effective light spot area of the metasurface to which the beam is transmitted; and
a unitary matrix $T^i_{a \times b}$ corresponding to each metasurface phase modulation is obtained by using the determined I, O, $F_{L1}$, $F_{L2}$, and $F_{\Delta xi}$, to obtain the sizes and the distribution of the electromagnetic resonance units on the metasurface.

12. The mode division multiplexer according to any one of claims 1 to 9, wherein the mode division multiplexer is a linearly polarized mode multiplexer, and a quantity (m+1) of times of phase modulation performed by the mode division multiplexing module on a beam and a quantity N of multiplexing modes of the linearly polarized mode multiplexer satisfies a formula: m=2N.

13. The mode division multiplexer according to any one of claims 1 to 9, wherein the mode division multiplexer is a non-linearly polarized mode multiplexer, and a quantity of times of phase modulation performed by the mode division multiplexing module on a beam is positively related to a quantity of multiplexing modes of the non-linearly polarized mode multiplexer.

14. The mode division multiplexer according to any one of claims 1 to 9, wherein both the first collimator and the second collimator are metasurfaces.

15. The mode division multiplexer according to any one of claims 1 to 9, wherein the electromagnetic resonance unit enables an adjustment range of a phase change value generated for a beam transmitted to the electromagnetic resonance unit to be 0 to $2\pi$,

16. The mode division multiplexer according to any one of claims 1 to 9, further comprising an assembly component, wherein the first collimator, the second collimator, and the mode division multiplexing module are all assembled into the assembly component.

17. A mode division multiplexing system, comprising an input fiber, an output fiber, and the mode division multiplexer according to any one of claims 1 to 16, wherein the input fiber and the output fiber are respectively connected to two opposite sides of the mode division multiplexer; the input fiber is close to a side of a first collimator in the mode division multiplexer, the output fiber is close to a side of a second collimator in the mode division multiplexer, and a beam is sequentially transmitted from the input fiber to the mode division multiplexer, and then to the output fiber; the input fiber is configured to provide a plurality of channels, and each channel transmits one independent beam to the mode division multiplexer; the mode division multiplexer is configured to perform a plurality of times of phase modulation on a plurality of independent beams input through the input fiber, so that spatial modes of the plurality of beams are respectively converted into spatial modes that match different fiber modes in the output fiber, and combine the plurality of beams, wherein beams transmitted through different channels are converted into beams with different spatial modes through the mode division multiplexer.

18. A mode division demultiplexing system, comprising an input fiber, an output fiber, and the mode division multiplexer according to any one of claims 1 to 16, wherein the input fiber and the output fiber are respectively connected to two opposite sides of the mode division multiplexer; the input fiber is close to a side of a second collimator in the mode division multiplexer, the output fiber is close to a side of a first collimator in the mode division multiplexer, and a beam is sequentially transmitted from the input fiber to the mode division multiplexer, and then to the output fiber; the input fiber supports a plurality of different fiber modes, and the different fiber modes are used to carry different signals and transmit the signals to the mode division multiplexer; the mode division multiplexer is configured to perform mode conversion on beams in different spatial modes and perform beam splitting, so that the different spatial modes of the beam are converted into spatial modes that match an output fiber mode, and perform beam splitting on a beam emitted from the input fiber; and the output fiber is configured to receive and transmit the split beam emitted through the mode division multiplexer, wherein the output fiber comprises a plurality of channels, and each channel is configured to transmit one independent split beam.

19. A communications system, comprising the mode division multiplexing system according to claim 17 and the mode division demultiplexing system according to claim 18, wherein the output fiber in the mode division multiplexing system is the input fiber in the mode division demultiplexing system, and a beam is transmitted between the mode division multiplexing system and the mode division demultiplexing system.

FIG. 1

FIG. 2

FIG. 3

FIG. 4

10a

FIG. 5

11

FIG. 6

200

FIG. 7

300

FIG. 8

FIG. 9

FIG. 10

FIG. 11

## INTERNATIONAL SEARCH REPORT

| International application No. |
| --- |
| **PCT/CN2020/080000** |

| A. | CLASSIFICATION OF SUBJECT MATTER |
| --- | --- |

G02B 6/293(2006.01)i;  G02B 6/28(2006.01)i

According to International Patent Classification (IPC) or to both national classification and IPC

| B. | FIELDS SEARCHED |
| --- | --- |

Minimum documentation searched (classification system followed by classification symbols)

G02B

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT: 电磁, 共振, 法诺, 复用, 准直, 相位, 模式, 谐振, 调谐, 多次, 多级, 超表面, 介质, 亚波长, 金属, MDM, MIM, vibrate, librate, resonance, tune, oscillate, multiplex, collimate, phase, convert, change, mode

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 104216051 A (SHANGHAI JIAO TONG UNIVERSITY) 17 December 2014 (2014-12-17) <br> description, paragraphs [0036]-[0051], and figures 1-10 | 1-19 |
| Y | CN 1588148 A (SHANGHAI JIAO TONG UNIVERSITY) 02 March 2005 (2005-03-02) <br> description, page 5, fourth-to-last line to page 10, second-to-last line, and figures 1-4 | 1-19 |
| Y | CN 101231441 A (NANJING UNIVERSITY) 30 July 2008 (2008-07-30) <br> description, page 2, line 3 to page 4, seventh-to-last line | 1-19 |
| A | CN 109307659 A (SHENZHEN UNIVERSITY) 05 February 2019 (2019-02-05) <br> entire document | 1-19 |
| A | CN 202995081 U (BOLIDA XIAMEN TECHNOLOGY CO., LTD.) 12 June 2013 (2013-06-12) <br> entire document | 1-19 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 May 2020** | **10 June 2020** |

| Name and mailing address of the ISA/CN | Authorized officer |
| --- | --- |
| **China National Intellectual Property Administration (ISA/CN)** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2020/080000** |

| Patent document cited in search report | | | Publication date (day/month/year) | Patent family member(s) | | | Publication date (day/month/year) |
| --- | --- | --- | --- | --- | --- | --- | --- |
| CN | 104216051 | A | 17 December 2014 | None | | | |
| CN | 1588148 | A | 02 March 2005 | CN | 1243262 | C | 22 February 2006 |
| CN | 101231441 | A | 30 July 2008 | None | | | |
| CN | 109307659 | A | 05 February 2019 | None | | | |
| CN | 202995081 | U | 12 June 2013 | None | | | |

Form PCT/ISA/210 (patent family annex) (January 2015)